# EUROPÄISCHE PATENTSCHRIFT

(11) **EP 2 441 346 B1**
(45) Veröffentlichungstag und Bekanntmachung des Hinweises auf die Patenterteilung: **04.04.2018**
(21) Anmeldenummer: 11185292.7
(22) Anmeldetag: 14.10.2011
(51) Int. Cl.: A61C 17/32, A46B 13/02, A61C 17/34, A61C 17/38

(54) **Reinigungsvorrichtung**
Cleaning device
Dispositif de nettoyage

(30) Priorität: 15.10.2010 DE 102010048624
(43) Veröffentlichungstag der Anmeldung: 18.04.2012
(73) Patentinhaber: Jäger, Anton, 89250 Senden (DE)
(72) Erfinder: Jäger, Anton, 89250 Senden (DE)
(74) Vertreter: Manitz Finsterwald Patentanwälte PartmbB

(56) Entgegenhaltungen:
- DE-A1- 3 342 374
- DE-U1-202008 016 815
- US-A- 4 163 302
- US-A1- 2004 084 063

## Beschreibung

Die Erfindung betrifft eine Reinigungsvorrichtung zum Ausführen einer hin- und hergehenden periodischen Arbeitsbewegung in Form einer Reinigungsbewegung.
US 2004/0084063 A1 beschreibt eine Zahnbürste, bei der der Kopf durch einen Fremdantrieb in einer Längsrichtung hin und her bewegt werden kann.
In der US 4 163 302 A ist ein Fahrzeug offenbart, das mit einer rotierend antreibbaren Reinigungsbürste zum Reinigen von Gebäudewänden ausgestattet ist. Die Reinigungsbürste ist am Ende eines Teleskoparms angebracht, dessen anderes Ende mit dem Fahrzeug gekoppelt ist. Mittels eines Hydrauliksystems kann der Teleskoparm ein- und ausgefahren sowie geschwenkt werden.
Es ist bekannt, zur Bearbeitung, z.B. zur Reinigung, von ansonsten unzulänglichen Bereichen beispielsweise zwecks Fensterreinigung an Wohnhäusern ein Reinigungsorgan, z.B. eine Waschbürste, am Ende einer teleskopierbaren oder in der Länge unveränderlichen Stange anzubringen. Um eine gerade für Reinigungszwecke vorteilhafte Hin- und Herbewegung des Reinigungsorgans zu erzielen, muss der Benutzer das Reinigungsorgan samt Stange und eventuell vorhandener Wasserleitung zum Zuführen des Wassers zum Reinigungsorgan ständig auf- und abbewegen. Je nach Ausgestaltung der Vorrichtung ist dies mit erheblichen körperlichen Anstrengungen verbunden, so dass derartige Reinigungsvorrichtungen für einen länger andauernden Einsatz ungeeignet sind.

Aufgabe der Erfindung ist es, eine Vorrichtung der eingangs genannten Art dahingehend zu verbessern, dass deren Benutzung auch über einen relativ langen Zeitraum insbesondere im Hinblick auf den aufzuwendenden Kraftaufwand möglich ist.
Die Lösung dieser Aufgabe erfolgt durch die Merkmale des Anspruchs 1. Erfindungsgemäß umfasst die Vorrichtung eine eine Längsrichtung definierende, mit der Hand zu haltende Haltestange sowie eine mit der Haltestange gekoppelte Arbeitseinheit, die zum Ausführen der parallel zur Längsrichtung verlaufenden Arbeitsbewegung relativ zur Haltestange bewegbar ist, wobei zum Erzeugen der Arbeitsbewegung ein Fremdantrieb vorgesehen ist. Als Fremdantrieb kann z.B. ein Motorantrieb, ein Fluidantrieb, ein Pneumatikantrieb oder ein Hydraulikantrieb vorgesehen sein.

Indem erfindungsgemäß die Arbeitseinheit relativ zur Haltestange bewegbar ist, ist es zum Ausführen der Arbeitsbewegung nicht erforderlich, die Haltestange zusammen mit der Arbeitseinheit, also die gesamte Vorrichtung, auf- und abzubewegen. Wenn, wie erfindungsgemäß vorgesehen, zum Erzeugen der Arbeitsbewegung ein Fremdantrieb vorgesehen ist, der Benutzer also die Arbeitsbewegung nicht selbst mit Muskelkraft erzeugen muss, beschränkt sich die Arbeit des Benutzers auf das Halten der Vorrichtung, d.h. weder ein Auf- und Abbewegen der gesamten Vorrichtung noch ein Hin- und Herbewegen der Arbeitseinheit relativ zur Haltestange muss vom Benutzer selbst vorgenommen werden.

Weitere bevorzugte Ausgestaltungen der Erfindung sind in den abhängigen Ansprüchen, der Beschreibung sowie der Zeichnung angegeben.

Es kann vorgesehen sein, dass die Arbeitseinheit mit einer sich in Längsrichtung erstreckenden und zu einer Rotation antreibbaren Spindel derart gekoppelt ist, dass eine Rotationsbewegung der Spindel in die Arbeitsbewegung umsetzbar ist.

Dabei wird die Relativbewegung zwischen Arbeitseinheit und Haltestange mittels einer in Drehung versetzbaren Spindel erreicht, so dass lediglich für eine Rotation der Spindel zu sorgen ist, um die Arbeitseinheit parallel zur Längsrichtung der Haltestange hin- und herbewegen zu können.

So ist es beispielsweise im Prinzip denkbar, dass der Benutzer selbst per Hand die Spindel in Drehung versetzt, beispielsweise mittels eines Kurbelmechanismus. In der Praxis möglich ist dies vor allem deshalb, da nicht die gesamte Haltestange samt Arbeitseinheit, sondern lediglich die leichtere Arbeitseinheit bewegt werden muss. Vorzuziehen ist es allerdings, wenn der Rotationsantrieb für die Spindel nicht vom Benutzer aufgebracht zu werden braucht. Insbesondere ist es erfindungsgemäß möglich, den Fremdantrieb, insbesondere einen Fluidantrieb oder Motorantrieb, für die Spindel einzusetzen, worauf nachstehend näher eingegangen wird.
In einem weiteren Ausführungsbeispiel ist die Spindel zu einer Rotationsbewegung mit einem einzigen Drehsinn antreibbar. Insbesondere wirkt die Arbeitseinheit mit der Spindel derart zusammen, dass eine Rotationsbewegung mit einem einzigen Drehsinn in entgegengesetzte Komponenten der Arbeitsbewegung umsetzbar ist. Eine derartige Ausgestaltung ist vor allem dann von Vorteil, wenn für die Spindel ein Antrieb gewählt wird, bei dem es - zumindest bei vertretbarem konstruktiven und/oder wirtschaftlichen Aufwand - nicht möglich oder nicht gewünscht ist, eine Umschaltung zwischen den beiden Rotationsrichtungen der Spindel vorzusehen. In einer bevorzugten Ausgestaltung ist die Spindel als Reversierspindel, Umkehrspindel, Kreuzspindel oder Kreuzgewindespindel ausgebildet. Derartige Spindeln sind auf dem generellen Gebiet des Aufwickelns bekannt, beispielsweise in Verbindung mit Kabel-, Seil- und Angelrollen. Der Vorteil dieser Spindeln besteht darin, dass sie nur in eine Richtung zu rotieren brauchen. Das Ausmaß der erzielbaren Arbeitsbewegung, d.h. der längs der Spindelachse erzielbare "Verfahrweg" oder "Hub", ist dabei durch die wirksame Länge der Spindel, d.h. der axialen Länge des Gewindes, festgelegt.

In einer weiteren Ausgestaltung der Erfindung ist für die Spindel ein Fluidantrieb vorgesehen. Insbesondere ist der Fluidantrieb dazu ausgebildet, die Strömungsenergie eines unter Druck zugeführten Fluids in die Rotationsbewegung der Spindel umzusetzen.

Der Fluidantrieb kann wenigstens ein unmittelbar vom Fluid angetriebenes Antriebsorgan, insbesondere eine Turbine oder ein Schaufelrad, aufweisen, von dem die Spindel antreibbar ist.

Derartige Fluidantriebe lassen sich äußerst kostengünstig herstellen und arbeiten sehr zuverlässig, wobei sich ausreichend hohe Drehmomente sowie ausreichend hohe Drehzahlen auch dann erzielen lassen, wenn der Fluidantrieb an einen herkömmlichen Hochdruckreiniger angeschlossen ist, wie er für Privatpersonen überall erhältlich ist. Ein Fluidantrieb lässt sich dann besonders einfach ausgestalten und kostengünstig herstellen, wenn keine Umschaltmöglichkeit für eine Änderung der Rotationsrichtung der Spindel erforderlich ist, weshalb die vorstehend erwähnte Ausgestaltung der Spindel z.B. als Kreuzgewindespindel in Verbindung mit einem Fluidantrieb besonders vorteilhaft ist.

Der Fluidantrieb kann eine Getriebeeinheit mit einem vom Fluid beaufschlagten Eingang am Antriebsorgan und einem mit der Spindel zusammenwirkenden Ausgang umfassen. Auf diese Weise lassen sich die benötigten Drehmoment- und Drehzahlverhältnisse an der Spindel in Abhängigkeit von dem zur Verfügung stehenden Fluiddruck sowie von der zugeführten Fluidmenge einstellen.

Es ist auch möglich, die Spindel motorisch anzutreiben, beispielsweise mittels eines Elektromotors. In diesem Fall kann die Spindel beispielsweise als eine Kugelrollspindel ausgebildet sein. Hierbei ist eine Umschaltmöglichkeit zwischen den Drehrichtungen der Spindel erforderlich, was in Verbindung z.B. mit einem Elektromotor aber unproblematisch ist. Der Verstellweg in Längsrichtung kann auf diese Weise variabel gehalten werden. Eine derartige Anordnung kann beispielsweise mit einer Endlagenerkennung versehen sein. Ebenso können verschiedene Programme festgelegt werden, die wahlweise beispielsweise einen Kurzhubbetrieb und einen Langhubbetrieb ermöglichen.

In einem weiteren Ausführungsbeispiel ist zum Erzeugen der Arbeitsbewegung ein Pneumatik- oder Hydraulikantrieb vorgesehen, wobei insbesondere die Arbeitseinheit mit einem Kolben gekoppelt ist, der in einem Zylinder durch abgestimmtes Beaufschlagen von wenigstens zwei durch den Kolben voneinander getrennten Kammern mit einem Medium hin- und herbewegbar ist.

In einer weiteren Ausgestaltung der Erfindung ist eine Überlastschutzeinrichtung für auf die Arbeitseinheit einwirkende und der Arbeitsbewegung entgegenwirkende äußere Kräfte vorgesehen. Dies ist beispielsweise dann von Vorteil, wenn die Gefahr besteht, dass bei einer Aufwärtsbewegung, also bei einer zu einer Verlängerung der Gesamtvorrichtung führenden Bewegung, der Arbeitseinheit diese gegen Hindernisse am zu reinigenden Objekt stößt. Die Überlastschutzeinrichtung kann sicherstellen, dass in einer Überlastsituation der Fremdantrieb, insbesondere die Spindel oder der Kolben, nicht beschädigt wird.

Die Überlastschutzeinrichtung kann einen Puffer und/oder eine Feder- oder Dämpfereinrichtung umfassen, die zwischen der Arbeitseinheit und dem Fremdantrieb, insbesondere der Spindel oder dem Kolben, wirksam ist.

Alternativ oder zusätzlich kann die Überlastschutzeinrichtung nach Art einer Sicherheitskupplung ausgebildet sein.

In einer bevorzugten Ausgestaltung, bei welcher die Spindel als Reversierspindel, Umkehrspindel, Kreuzspindel oder Kreuzgewindespindel ausgebildet ist, ist die Überlastschutzeinrichtung in eine zwischen der Spindel und der Arbeitseinheit wirksame Kulissenführung integriert, welche die Rotationsbewegung der Spindel in die Arbeitsbewegung der Arbeitseinheit umsetzt. Dabei ist die Kulissenführung derart ausgebildet, dass wenigstens ein in eine Kulisse der Spindel eingreifendes Führungselement in einer Überlastsituation zunächst außer Eingriff mit der Kulisse und anschließend an einer in Längsrichtung beabstandeten Stelle wieder in Eingriff mit der Kulisse gelangt. Das beispielsweise als Kulissenstein ausgebildete Führungselement kann z.B. mittels einer Feder in die Kulisse der Spindel hinein vorgespannt sein, so dass es beispielsweise aufgrund einer geeignet angeordneten und ausgebildeten Schräge aus der Kulisse herausgedrückt wird, wenn Spindel und Kulissenstein parallel zur Längsrichtung gegeneinander bewegt werden, wie es der Fall ist, wenn die Arbeitseinheit an ein Hindernis stößt. Der besondere Vorteil dieser Überlastschutzeinrichtung besteht darin, dass das Führungselement von selbst wieder in die Kulisse zurückspringen kann, und zwar in einer Relativstellung zwischen Spindel und Arbeitseinheit, in welcher die Arbeitseinheit nicht mehr mit dem Hindernis zusammenwirkt. Der Benutzer braucht folglich keine Maßnahmen zu ergreifen, um nach einer Überlastsituation die Vorrichtung wieder in Gang zu setzen. Diese Ausgestaltung der Erfindung bietet also nicht nur einen vollautomatischen Überlastschutz, sondern auch eine praktisch verzögerungsfreie vollautomatische Wiederaufnahme des Arbeitsbetriebs im Anschluss an eine Überlastsituation.

Des Weiteren kann erfindungsgemäß vorgesehen sein, dass für die Arbeitseinheit eine Verdrehsicherung vorgesehen ist, die ein Mitdrehen der Arbeitseinheit mit der Spindel verhindert. Die Verdrehsicherung kann zwischen der Arbeitseinheit, insbesondere einem die Spindel umgebenden Hülsenteil, und einem bezüglich der Spindel drehfesten Aufnahmeteil, insbesondere einem äußeren Aufnahmerohr, wirksam sein. Die Verdrehsicherung kann eine parallel zur Längsrichtung verlaufende Zwangsführung zwischen der Arbeitseinheit und dem Aufnahmeteil umfassen.

Um die Stabilität der erfindungsgemäßen Vorrichtung zu erhöhen und insbesondere ein seitliches Auswandern der Spindeln im Bereich ihres freien Endes zu verhindern, kann vorgesehen sein, dass die Spindel zumindest im Bereich ihres der Arbeitseinheit zugewandten Endes mittels eines Aufnahmeteils, insbesondere eines äußeren Aufnahmerohres, und/oder mittels der Arbeitseinheit, insbesondere eines die Spindel umgebenden Hülsenteils, geführt und/oder gelagert ist.

Bevorzugt ist es, wenn das für einen Fluidantrieb der Spindel eingesetzte Fluid anschließend der Arbeitseinheit zugeführt wird, um auf diese Weise eine Doppelnutzung des Fluids zu erzielen. Von der Antriebseinheit zur Arbeitseinheit kann das Fluid über eine innere Leitung der Vorrichtung und/oder über eine außen liegende Leitung geführt werden.

Die Erfindung wird im Folgenden beispielhaft unter Bezugnahme auf die Zeichnung beschrieben. Es zeigen:
- Fig. 1: schematisch eine Ausführungsform einer erfindungsgemäßen Vorrichtung,
- Fig. 2: schematisch eine erfindungsgemäße Vorrichtung gemäß einer weiteren Ausführungsform, und
- Fig. 3: schematisch eine erfindungsgemäße Vorrichtung gemäß einer weiteren Ausführungsform.

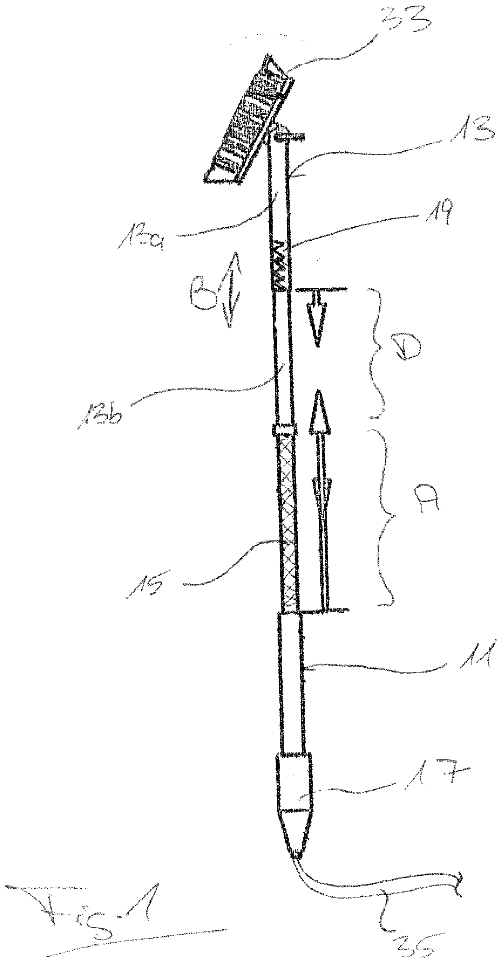

Fig. 1 zeigt eine erfindungsgemäße Reinigungsvorrichtung, die einen lang gestreckten Aufbau aufweist, wobei an dem einen Ende eine Arbeitseinheit 13 mit einer Reinigungsbürste 33 angebracht und am anderen Ende eine Zufuhrleitung 35 angeschlossen ist, über welche der Reinigungsvorrichtung beispielsweise von einem herkömmlichen Hochdruckreiniger ein unter Druck stehendes Fluid, insbesondere Wasser, zugeführt werden kann.

Die Vorrichtung ist hier nur schematisch und teilweise dargestellt. Eine Haltestange 11, an welcher ein Benutzer die Vorrichtung mit der Hand halten kann, erstreckt sich tatsächlich bis in Höhe der Arbeitseinheit 13 und nimmt nachstehend beschriebene Komponenten in sich auf.

Die Vorrichtung ist mit einer Kreuzgewindespindel 15 versehen, die um eine parallel zur Längserstreckung der Vorrichtung verlaufende Achse drehbar gelagert ist. Um die Spindel 15 in Rotation zu versetzen, ist eine Antriebseinheit 17 vorgesehen, auf die an dieser Stelle nicht näher eingegangen wird. Bei der Antriebseinheit 17 kann es sich beispielsweise um einen Fluidantrieb oder um einen Motorantrieb handeln.

Die Arbeitseinheit 13 umfasst in diesem Ausführungsbeispiel einen vorderen Abschnitt 13a, der die Reinigungsbürste 33 trägt, sowie einen hinteren Teil 13b, der mit der Spindel 15 zusammenwirkt. Zwischen den beiden Abschnitten 13a, 13b der Arbeitseinheit 13 befindet sich eine Feder 19, die als Puffer bzw. Überlastschutzeinrichtung wirkt, wie es im Einleitungsteil beschrieben wurde. Stößt die Reinigungsbürste 33 bei einer Aufwärtsbewegung gegen ein Hindernis, verkürzt sich aufgrund des Zusammendrückens der Feder 19 die Länge der Arbeitseinheit 13, so dass diese Überlastsituation nicht zu Beschädigungen im Bereich der Kopplung zwischen Arbeitseinheit 13 und Spindel 15 führt. Der hierdurch in Längsrichtung vorhandene Dämpfungsbereich D ist in Fig. 1 schematisch angedeutet.

Wie bereits im Einleitungsteil allgemein dargelegt, wird die Rotationsbewegung der Spindel 15 in eine periodische Auf- und Abbewegung bzw. Hin- und Herbewegung (Arbeitsbewegung B) der Arbeitseinheit 13 relativ zur Spindel 15 und somit zur Haltestange 11 umgesetzt, wie es durch den Doppelpfeil angedeutet ist. Geführt durch das Gewinde der Spindel 15 bewegt sich die Arbeitseinheit 13 während einer stets nur mit einem Drehsinn erfolgender Rotationsbewegung der Spindel 15 auf und ab, wobei die Hublänge durch die axiale Länge des Spindelgewindes bestimmt ist. Dieser Verfahrweg steht als Arbeitshub zur Verfügung und ist in Fig. 1 als Arbeitsbereich A angedeutet. In Fig. 1 ist die Vorrichtung also mit maximal ausgefahrener Arbeitseinheit 13 dargestellt.

Das über die Leitung 35 zugeführte Fluid, insbesondere Wasser, kann der Reinigungsbürste 33 beispielsweise über eine nicht dargestellte, zentral durch die Vorrichtung hindurch verlaufende Leitung, beispielsweise einen Schlauch, zugeführt werden, z.B. auch unter Einbeziehung der Spindel 15. Alternativ oder zusätzlich ist es möglich, das Fluid über eine außen liegende Leitung zuzuführen.

Wenn es sich bei dem Antrieb 17 für die Rotationsbewegung der Spindel 15 um einen Fluidantrieb handelt, kann das für den Drehantrieb der Spindel 15 sorgende Fluid anschließend in geeigneter Weise der Reinigungsbürste 33 zugeführt werden, um auf diese Weise doppelt genutzt zu werden.

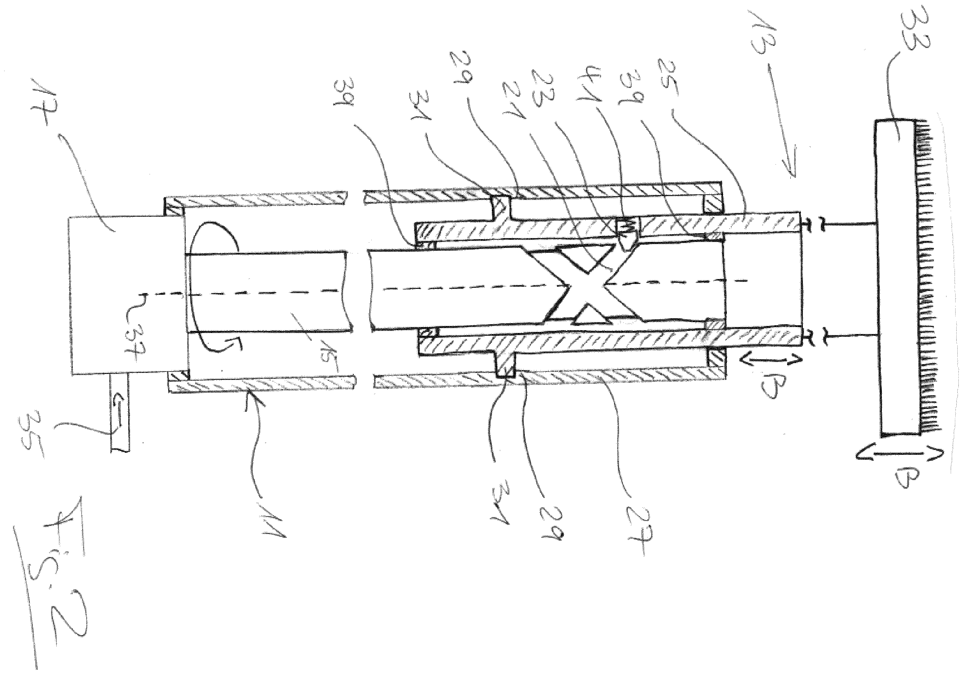

In dem Ausführungsbeispiel der Fig. 2 umfasst die Reinigungsvorrichtung einen Fluidantrieb 17, dem das unter Druck stehende, beispielsweise von einem angeschlossenen Hochdruckreiniger gelieferte Wasser, über eine Leitung 35 zugeführt wird und der eine Kreuzgewindespindel 15 in Rotation um eine Drehachse 37 versetzen kann.

Die Spindel 15 trägt in ihrem oberen Bereich ein Hülsenteil 25 einer Arbeitseinheit 13, die außerdem eine mit dem Hülsenteil 25 verbundene Reinigungsbürste 33 umfasst.

Das Hülsenteil 25 ist mit einem an seiner Innenseite vorstehenden Führungselement 23 in Form eines Kulissensteins versehen, der in das als Kulisse 21 dienende Gewinde der Spindel 15 eingreift, von dem hier nur ein Teil der Gewindegänge angedeutet ist.

Wenn die Spindel 15 rotiert, sorgt die von der Kulisse 21 und dem Kulissenstein 23 gebildete Kulissenführung dafür, dass sich das Hülsenteil 25 und somit die gesamte Arbeitseinheit 13 samt Reinigungsbürste 33 längs der Spindel 15 hin- und herbewegt, wobei die hier nicht dargestellte Ausgestaltung der Endbereiche des Spindelgewindes für die Richtungsumkehr am oberen Ende und am unteren Ende der Spindel 15 sorgen.

Ein Mitdrehen des Hülsenteils 25 und damit der Arbeitseinheit 13 mit der Spindel 15 wird dadurch verhindert, dass das Hülsenteil 25 mit einem Aufnahmeteil 27 in Form eines äußeren Aufnahmerohres über eine längs der Drehachse 37 verlaufende Zwangsführung drehfest geführt wird. Die Zwangsführung wird von Vorsprüngen 31 an der Außenseite des Hülsenteils 25 und Schlitzen 29 im Aufnahmerohr 27 gebildet wird. Das Außenrohr 27 bildet gleichzeitig die Haltestange 11 für den Benutzer.

Stabilität erhält diese Anordnung durch eine geeignete Führung bzw. Lagerung der Spindel 15. In Fig. 2 ist dies schematisch angedeutet. Die Spindel 15 wird zumindest an ihrem oberen Ende durch eine an der Innenseite des Hülsenteils 25 ausgebildete Gleitführung 39 geführt.

Eine Besonderheit dieses Ausführungsbeispiels stellt die im Einleitungsteil bereits angesprochene Überlastschutzeinrichtung dar, die hier in die Kulissenführung aus Kulisse 21 der Spindel 15 und Kulissenstein 23 des Hülsenteils 25 integriert ist. Der Kulissenstein 23 ist mittels einer Feder 41 in die Kulisse 21 hinein vorgespannt. Gegen die Rückstellkraft dieser Feder 41 kann der Kulissenstein 23 daher außer Eingriff mit der Kulisse 21 gelangen, wenn externe Kräfte eine axiale Relativbewegung zwischen Spindel 15 und Hülsenteil 25 bewirken. Dies ist insbesondere dann der Fall, wenn die Reinigungsbürste 33 bei einer Bewegung im Sinne einer Verlängerung der Gesamtvorrichtung gegen ein Hindernis stößt. Aufgrund einer am Kulissenstein 23 ausgebildeten Schräge wird hierbei der Kulissenstein 23 aus der Kulisse 21 herausgedrückt, so dass sich die Anordnung aus Hülsenteil 25 und Spindel 15 verkürzen kann. Erreicht der Kulissenstein 23 dabei den nächsten Gewindegang der Kulisse 21, springt der Kulissenstein 23 wieder in die Kulisse 21 zurück, woraufhin die Arbeitsbewegung B aufgrund der weiterhin rotierenden Spindel 15 sofort fortgesetzt wird.

In Fig. 2 nicht dargestellt ist die Wasserzufuhr zur Reinigungsbürste 33. Das Wasser kann innerhalb des Aufnahmerohres 27, beispielsweise durch die Spindel 15 hindurch, zugeführt werden, wobei es alternativ möglich ist, das Wasser über eine außerhalb des Aufnahmerohres 27 verlegte Leitung zuzuführen.

Die Ausgestaltung des Fluidantriebs 17 zur Rotation der Spindel 15 ist grundsätzlich beliebig, so dass hierauf nicht näher eingegangen zu werden braucht. Derartige Fluidantriebe sind grundsätzlich bekannt. Insbesondere umfasst der Fluidantrieb 17 als Eingangsteil ein als Turbine oder Schaufelrad ausgebildetes Antriebsorgan, das unmittelbar von dem über die Leitung 35 zugeführten Fluid beaufschlagt wird und auf diese Weise ein Ausgangsteil in Rotation versetzt, das über ein Getriebe mit der Spindel 15 verbunden ist.

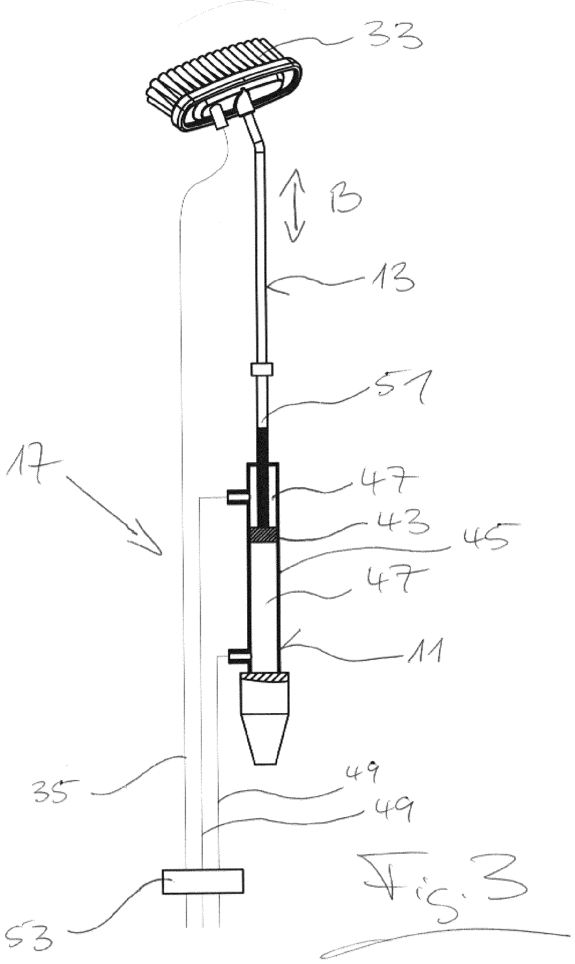

In dem Ausführungsbeispiel der Fig. 3 ist als Fremdantrieb 17 für die Arbeitseinheit 13 ein Pneumatik- oder Hydraulikantrieb vorgesehen. Die Arbeitseinheit 13 umfasst eine Kolbenstange 51, die mit einem Kolben 43 verbunden ist. Der Kolben 43 ist in einem Zylinder 45 hin- und herbewegbar. Der Zylinder 45 kann als Haltestange 11 dienen, wobei dies aber nicht zwingend ist. Auch kann die Länge des Zylinders 45 bzw. der Haltestange 11 größer gewählt werden als es in Fig. 3 dargestellt ist. Auch ist es möglich, dass sich an das von der Arbeitseinheit 13 abgewandte Ende des Zylinders 45 ein hier nicht dargestellter Abschnitt anschließt, der als Haltestange bzw. als Verlängerung der vom Zylinder 45 mitgebildeten Haltestange dient

In dem dargestellten Ausführungsbeispiel umfasst der Zylinder 45 zwei Kammern 47, die auf entgegengesetzten Seiten des Kolbens 43 gelegen sind. Indem die beiden Kammern 47 in geeigneter Weise mit einem Medium, beispielsweise Druckluft, beaufschlagt werden, kann der Kolben 43 im Zylinder 45 hin- und herbewegt werden. Gesteuert wird dieser Fremdantrieb für die Arbeitseinheit 13 durch eine in Fig. 3 lediglich schematisch angedeutete Steuerung 53, mit der die Steuerleitungen 49 verbunden sind.

Ebenfalls mit der Steuerung 53 verbunden ist eine Fluidleitung 35, über welche der an der Arbeitseinheit 13 vorgesehenen Reinigungsbürste 33 ein Reinigungsfluid, insbesondere Wasser, zugeführt wird.

Ein Überlastschutz kann auch in dieses Ausführungsbeispiel der Erfindung integriert sein, beispielsweise in Form einer Feder oder eines Dämpfers, die bzw. der in geeigneter Weise zwischen der Arbeitseinheit 13 und z.B. dem Zylinder 45 wirksam ist.

### Bezugszeichenliste

- 11: Haltestange
- 13: Arbeitseinheit
- 13a: vorderer Abschnitt
- 13b: hinterer Abschnitt
- 15: Spindel
- 17: Fremdantrieb, Fluidantrieb, Pneumatikantrieb
- 19: Dämpfungsfeder
- 21: Kulisse, Spindelgewinde
- 23: Führungselement, Kulissenstein
- 25: Hülsenteil
- 27: Aufnahmeteil, äußeres Aufnahmerohr
- 29: Schlitz
- 31: Vorsprung
- 33: Reinigungsbürste
- 35: Zufuhrleitung
- 37: Drehachse
- 39: Gleitführung
- 41: Feder
- 43: Kolben
- 45: Zylinder
- 47: Kammer
- 49: Steuerleitung
- 51: Kolbenstange
- 53: Steuerung

- B: Arbeitsbewegung
- D: Dämpfungsbereich
- A: Arbeitsbereich

## Patentansprüche

1. Reinigungsvorrichtung zum Ausführen einer hin- und hergehenden, periodischen Arbeitsbewegung (B) in Form einer Reinigungsbewegung, wobei die Vorrichtung zur Fensterreinigung an Wohnhäusern ausgebildet ist, mit einer eine Längsrichtung definierenden, mit der Hand zu haltenden Haltestange (11) und einer mit der Haltestange gekoppelten Arbeitseinheit (13), die zum Ausführen der parallel zur Längsrichtung verlaufenden Arbeitsbewegung (B) relativ zur Haltestange bewegbar ist, wobei zum Erzeugen der Arbeitsbewegung (B) ein Fremdantrieb (17) vorgesehen ist.

2. Vorrichtung nach Anspruch 1,
**dadurch gekennzeichnet,**
**dass** die Arbeitseinheit (13) mit einer sich in Längsrichtung erstreckenden und zu einer Rotation antreibbaren Spindel (15) derart gekoppelt ist, dass eine Rotationsbewegung der Spindel (15) in die Arbeitsbewegung (B) umsetzbar ist.

3. Vorrichtung nach Anspruch 2,
**dadurch gekennzeichnet,**
**dass** die Spindel (15) zu einer Rotationsbewegung mit einem einzigen Drehsinn antreibbar ist.

4. Vorrichtung nach Anspruch 2 oder 3,
**dadurch gekennzeichnet,**
**dass** die Spindel (15) als Reversierspindel, Umkehrspindel, Kreuzspindel oder Kreuzgewindespindel ausgebildet ist.

5. Vorrichtung nach einem der Ansprüche 2 bis 4,
**dadurch gekennzeichnet,**
**dass** für die Spindel (15) ein Fluidantrieb (17) vorgesehen ist.

6. Vorrichtung nach Anspruch 5,
**dadurch gekennzeichnet,**
**dass** der Fluidantrieb (17) eine Getriebeeinheit mit einem vom Fluid beaufschlagten Eingang am Antriebsorgan und einem mit der Spindel (15) zusammenwirkenden Ausgang umfasst.

7. Vorrichtung nach einem der Ansprüche 2 oder 4 bis 6,
**dadurch gekennzeichnet,**
**dass** die Spindel (15) zu entgegengesetzten Rotationsbewegungen antreibbar ist, wobei eine erste Rotationsbewegung in eine erste Komponente der Arbeitsbewegung (B) und eine zweite, der ersten Rotationsbewegung entgegengesetzte Rotationsbewegung in eine zweite, der ersten Komponente entgegengesetzte Komponente der Arbeitsbewegung (B) umsetzbar ist.

8. Vorrichtung nach Anspruch 7,
**dadurch gekennzeichnet,**
**dass** die Spindel (15) motorisch, insbesondere mittels eines Elektromotors, antreibbar ist.

9. Vorrichtung nach Anspruch 7 oder 8,
**dadurch gekennzeichnet,**
**dass** die Spindel (15) als Kugelrollspindel ausgebildet ist.

10. Vorrichtung nach einem der vorhergehenden Ansprüche,
**dadurch gekennzeichnet,**
**dass** zum Erzeugen der Arbeitsbewegung (B) ein Pneumatik- oder Hydraulikantrieb (17) vorgesehen ist,
wobei insbesondere die Arbeitseinheit (13) mit einem Kolben (43) gekoppelt ist, der in einem Zylinder (45) durch abgestimmtes Beaufschlagen von wenigstens zwei durch den Kolben (43) voneinander getrennten Kammern (47) mit einem Medium hin- und herbewegbar ist.

11. Vorrichtung nach einem der vorhergehenden Ansprüche,
**dadurch gekennzeichnet,**
**dass** eine Überlastschutzeinrichtung für auf die Arbeitseinheit (13) einwirkende und der Arbeitsbewegung (B) entgegenwirkende äußere Kräfte vorgesehen ist.

12. Vorrichtung nach Anspruch 11,
**dadurch gekennzeichnet,**
**dass** die Überlastschutzeinrichtung nach Art einer Sicherheitskupplung ausgebildet ist.

13. Vorrichtung nach Anspruch 11 oder 12,
**dadurch gekennzeichnet,**
**dass** die Überlastschutzeinrichtung in eine zwischen der, insbesondere als Reversierspindel, Umkehrspindel, Kreuzspindel oder Kreuzgewindespindel ausgebildeten, Spindel (15) und der Arbeitseinheit (13) wirksame, die Rotationsbewegung der Spindel (15) in die Arbeitsbewegung (B) der Arbeitseinheit (13) umsetzende Kulissenführung (21, 23) integriert ist, die derart ausgebildet ist, dass wenigstens ein in eine Kulisse (21) der Spindel (15) eingreifendes Führungselement (23) in einer Überlastsituation zunächst außer Eingriff mit der Kulisse (21) und anschließend an einer in Längsrichtung beabstandeten Stelle wieder in Eingriff mit der Kulisse (21) gelangt.

14. Vorrichtung nach einem der Ansprüche 2 bis 13, **dadurch gekennzeichnet,**
**dass** für die Arbeitseinheit (13) eine Verdrehsicherung vorgesehen ist, die ein Mitdrehen der Arbeitseinheit (13) verhindert und zwischen der Arbeitseinheit (13), insbesondere einem die Spindel (15) umgebenden Hülsenteil (25), und einem drehfesten Aufnahmeteil (27), insbesondere einem äußeren Aufnahmerohr, wirksam ist.

15. Vorrichtung nach einem der Ansprüche 10 bis 14, **dadurch gekennzeichnet,**
**dass** die Spindel (15) oder der Kolben (43) zumindest im Bereich ihres bzw. seines der Arbeitseinheit (13) zugewandten Endes mittels eines Aufnahmeteils (27), insbesondere eines äußeren Aufnahmerohres, und/oder mittels der Arbeitseinheit (13), insbesondere eines die Spindel (15) bzw. den Kolben (43) umgebenden Hülsenteils (25), geführt ist.

## Claims

1. A cleaning apparatus for carrying out a periodic working movement (B) moving to and fro in the form of a cleaning movement, wherein the apparatus is configured for cleaning windows at residential properties, having a holding rod (11) which is to be held by hand and which defines a longitudinal direction, and having a work unit (13) which is coupled to the holding rod and which is movable relative to the holding rod for carrying out the working movement (B) running parallel to the longitudinal direction, wherein an external drive (17) is provided for generating the working movement (B).

2. An apparatus in accordance with claim 1,
**characterized in that**
the work unit (13) is coupled to a spindle (15) extending in the longitudinal direction and drivable to make a rotation such that a rotational movement of the spindle (15) can be converted into the working movement (B).

3. An apparatus in accordance with claim 2,
**characterized in that**
the spindle (15) can be driven to make a rotational movement having a single sense of rotation.

4. An apparatus in accordance with claim 2 or claim 3,
**characterized in that**
the spindle (15) is configured as a reversing spindle, a reversal spindle, a cross spindle or a cross-threaded spindle.

5. An apparatus in accordance with any one of the claims 2 to 4,
**characterized in that**
a fluid drive (17) is provided for the spindle (15).

6. An apparatus in accordance with claim 5,
**characterized in that**
the fluid drive (17) comprises a transmission unit having an inlet acted on by fluid at a drive member and having an outlet cooperating with the spindle (15).

7. An apparatus in accordance with any one of the claims 2 or 4 to 6,
**characterized in that**
the spindle (15) can be driven to make opposite rotational movements, with a first rotational movement being able to be converted into a first component of the working movement (B) and a second rotational movement opposite to the first rotational movement being able to be converted into a second component of the working movement (B) opposite the first component.

8. An apparatus in accordance with claim 7,
**characterized in that**
the spindle (15) can be driven by a motor, in particular by means of an electric motor.

9. An apparatus in accordance with claim 7 or claim 8,
**characterized in that**
the spindle (15) is configured as a ball screw spindle.

10. An apparatus in accordance with any one of the preceding claims,
**characterized in that**
a pneumatic drive or a hydraulic drive (17) is provided for generating the working movement (B),
with in particular the work unit (13) being coupled to a piston (43) which is movable to and fro in a cylinder (45) by coordinated application of a medium to at least two chambers (47) separated from one another by the piston (43).

11. An apparatus in accordance with any one of the preceding claims,
**characterized in that**
an overload protection device is provided for external forces acting on the work unit (13) and acting against the working movement (B).

12. An apparatus in accordance with claim 11,
**characterized in that**
the overload protection device is configured in the manner of a safety coupling.

13. An apparatus in accordance with claim 11 or claim 12,
**characterized in that**
the overload protection device is integrated into a cam guide (21, 23) which is active between the spindle (15), which is in particular configured as a reversing spindle, a reversal spindle, a cross spindle or a cross-threaded spindle, and the work unit (13); which converts the rotational movement of the spindle (15) into the working movement (B) of the work unit (13); and which is configured such that at least one guide element (23) engaging into a slotted link (21) of the spindle (15) first moves out of engagement with the slotted link (21) in an overload situation and subsequently moves back into engagement with the slotted link (21) at a point spaced apart in the longitudinal direction.

14. An apparatus in accordance with any one of the claims 2 to 13,
**characterized in that**
a security against rotation is provided for the work unit (13) which prevents a rotation of the work unit (13) and which is effective between the work unit (13), in particular a sleeve part (25) surrounding the spindle (15), and a rotationally fixed reception part (27), in particular an external reception tube.

15. An apparatus in accordance with any one of the claims 10 to 14,
**characterized in that**
the spindle (15) or the piston (43) is guided at least in the region of its end facing the work unit (13) by means of a reception part (27), in particular an external reception tube, and/or by means of the work unit (13), in particular a sleeve part (25) surrounding the spindle (15) or the piston (43).

## Revendications

1. Dispositif de nettoyage pour effectuer un mouvement de travail périodique en va-et-vient (B) sous la forme d'un mouvement de nettoyage, le dispositif étant réalisé pour le nettoyage de vitres de bâtiments d'habitation, comportant une barre de retenue (11) définissant une direction longitudinale, à maintenir par la main, et une unité de travail (13) couplée à la barre de retenue et mobile par rapport à la barre de retenue pour effectuer le mouvement de travail (B) parallèle à la direction longitudinale, un entraînement externe (17) étant prévu pour générer le mouvement de travail (B).

2. Dispositif selon la revendication 1,
**caractérisé en ce que**
l'unité de travail (13) est couplée à une broche (15) qui s'étend en direction longitudinale et qui peut être entraînée en rotation, de telle sorte qu'un mouvement de rotation de la broche (15) est convertissable en le mouvement de travail (B).

3. Dispositif selon la revendication 2,
**caractérisé en ce que**
la broche (15) peut être entraînée en un mouvement de rotation dans un seul sens de rotation.

4. Dispositif selon la revendication 2 ou 3,
**caractérisé en ce que**
la broche (15) est réalisée sous forme de broche réversible, de broche d'inversion, de broche à pas en croix ou de broche filetée à pas en croix.

5. Dispositif selon l'une des revendications 2 à 4,
**caractérisé en ce que**
un entraînement à fluide (17) est prévu pour la broche (15).

6. Dispositif selon la revendication 5,
**caractérisé en ce que**
l'entraînement à fluide (17) comprend une unité de transmission présentant une entrée sollicitée par un fluide, sur l'organe menant, et une sortie coopérant avec la broche (15).

7. Dispositif selon l'une des revendications 2 ou 4 à 6,
**caractérisé en ce que**
la broche (15) est susceptible d'être entraînée en mouvements de rotation opposés, un premier mouvement de rotation pouvant être converti en une première composante du mouvement de travail (B), et un second mouvement de rotation opposé au premier mouvement de rotation pouvant être converti en une seconde composante du mouvement de travail (B) opposée à la première.

8. Dispositif selon la revendication 7,
**caractérisé en ce que**
la broche (15) est susceptible d'être entraînée par voie motrice, en particulier au moyen d'un moteur électrique.

9. Dispositif selon la revendication 7 ou 8,
**caractérisé en ce que**
la broche (15) est réalisée sous forme de broche filetée à billes.

10. Dispositif selon l'une des revendications précédentes,
**caractérisé en ce que**
pour générer le mouvement de travail (B), il est prévu un entraînement pneumatique ou hydraulique (17),
et en particulier l'unité de travail (13) est couplée à un piston (43) qui est mobile en va-et-vient dans un cylindre (45) par alimentation adaptée d'un milieu à au moins deux chambres (47), séparées l'une de l'autre par le piston (43).

11. Dispositif selon l'une des revendications précédentes,
**caractérisé en ce que**
il est prévu un moyen de protection anti-surcharge pour des forces extérieures agissant sur l'unité de travail (13) et s'opposant au mouvement de travail (B).

12. Dispositif selon la revendication 11,
**caractérisé en ce que**
le moyen de protection anti-surcharge est réalisé sous la forme d'un accouplement de sécurité.

13. Dispositif selon la revendication 11 ou 12,
**caractérisé en ce que**
le moyen de protection anti-surcharge est intégré dans un guidage à coulisse (21, 23) qui agit entre la broche (15), réalisée en particulier sous forme de broche réversible, de broche d'inversion, de broche à pas en croix ou de broche filetée à pas en croix, et l'unité de travail (13) et qui convertit le mouvement de rotation de la broche (15) en le mouvement de travail (B) de l'unité de travail (13), guidage qui est réalisé de telle sorte qu'un moins un élément de guidage (23) venant s'engager dans une coulisse (21) de la broche (15) vient tout d'abord se dégager de la coulisse (21) en cas de situation de surcharge, et revient ensuite en engagement avec la coulisse (21) à un emplacement espacé en direction longitudinale.

14. Dispositif selon l'une des revendications 2 à 13,
**caractérisé en ce que**
un moyen de blocage anti-rotation (13) est prévu pour l'unité de travail (13), qui empêche une co-rotation de l'unité de travail (13) et qui agit entre l'unité de travail (13) en particulier une partie formant douille (25) entourant la broche (15), et une partie de logement (27) solidaire en rotation, en particulier un tube de logement extérieur.

15. Dispositif selon l'une des revendications 10 à 14,
**caractérisé en ce que**
la broche (15) ou le piston (43) est guidé au moins dans la zone de son extrémité tournée vers l'unité de travail (13) au moyen d'une partie de logement (27), en particulier d'un tube de logement extérieur, et/ou au moyen de l'unité de travail (13), en particulier d'une partie formant douille (25) entourant la broche (15) ou le piston (43).
